# EUROPÄISCHE PATENTSCHRIFT

(11) **EP 1 434 955 B1**
(45) Veröffentlichungstag und Bekanntmachung des Hinweises auf die Patenterteilung: **19.09.2007**
(21) Anmeldenummer: 02776775.5
(22) Anmeldetag: 04.10.2002
(51) Int. Cl.: F16H 53/02, B21D 26/02, B21D 53/84, B23P 11/00, F01L 1/047

(54) **VERFAHREN ZUM VERBINDEN VON BAUTEILEN MIT HOHLWELLEN, VORZUGSWEISE ZUR HERSTELLUNG VON NOCKENWELLEN UND DANACH HERGESTELLTE NOCKENWELLE**
METHOD FOR LINKING ELEMENTS TO HOLLOW SHAFTS, PREFERABLY FOR PRODUCING CAMSHAFTS, AND RESULTING CAMSHAFT
PROCEDE POUR RELIER DES ELEMENTS A DES ARBRES CREUX, DE PREFERENCE POUR PRODUIRE DES ARBRES A CAMES, ET ARBRE A CAMES AINSI PRODUIT

(30) Priorität: 11.10.2001 DE 10150093
(43) Veröffentlichungstag der Anmeldung: 07.07.2004
(73) Patentinhaber: Furchheim, Bodo, 09127 Chemnitz (DE)
(72) Erfinder: Furchheim, Bodo, 09127 Chemnitz (DE)
(74) Vertreter: Thiel, Christian
(86) Internationale Anmeldenummer: PCT/DE2002/003745
(87) Internationale Veröffentlichungsnummer: WO 2003/033948

(56) Entgegenhaltungen:
- EP-A- 0 320 789
- DE-A- 19 909 184
- US-A- 4 597 365
- US-A- 5 101 554
- PATENT ABSTRACTS OF JAPAN vol. 011, no. 258 (M-618), 21. August 1987 (1987-08-21) -& JP 62 064428 A (MUSASHI SEIMITSU IND CO LTD), 23. März 1987 (1987-03-23)
- PATENT ABSTRACTS OF JAPAN vol. 012, no. 098 (M-680), 31. März 1988 (1988-03-31) -& JP 62 233562 A (NISSAN MOTOR CO LTD), 13. Oktober 1987 (1987-10-13)
- PATENT ABSTRACTS OF JAPAN vol. 1999, no. 03, 31. März 1999 (1999-03-31) -& JP 10 339110 A (NIPPON SEIKO KK), 22. Dezember 1998 (1998-12-22)

## Beschreibung

Die Erfindung betrifft ein Verfahren zum Verbinden von Bauteilen, insbesondere von einzelnen Nockenringen, mit einer Hohlwelle zu einer Nockenwelle, hergestellt im Innenhochdruck-Umformverfahren (IHU-Verfahren). Die Erfindung betrifft ferner eine Hohlwelle, auf der Bauteile, vorzugsweise Nockenringe, kraft- und formschlüssig befestigt sind. Ein bevorzugtes Anwendungsgebiet ist die Herstellung von Nokkenwellen, insbesondere für Kraftfahrzeugmotoren.

Es ist bekannt, Nockenwellen nach dem IHU-Verfahren herzustellen, indem in ein IHU-Werkzeug die Hohlwelle und auf ihr Bauteile, das sind Nockenringe und Antriebselemente, entsprechend ihrer Funktion eingelegt werden. Der erzeugte Innendruck bewirkt, dass sich die Welle ausdehnt und die Bauelemente dadurch kraft- und formschlüssig mit der Welle verbunden werden (DE 199 09 184 A1; DE 199 32 810 A1). Die Nockenringe sowie auch andere Bauteile werden in einem getrennten Verfahren hergestellt und besitzen die dem späteren Einsatz entsprechenden Abmessungen und Werkstoffeigenschaften, d.h. Verschleißfestigkeit. Es werden in gleicher Weise auch Antriebselemente, wie z.B. Zahnräder befestigt. Durch den IHU-Prozess wird die Welle erst elastisch, dann plastisch verformt und die Bauteile sind hierdurch exakt fixiert und befestigt. JP 62-233562 offenbart ein ähnliches Verfahren und ist gattungsbildend für die Verfahren nach den Ansprüchen 1 - 3 und die Nockenwelle nach Anspruch 9.

Durch den Innendruck erfolgt jedoch auch eine elastische Verformung des zu befestigenden Bauteiles, z.B. des Nockenringes. Die elastische Verformung des Nockenringes überbrückt die Fertigungstoleranzen zwischen der Außenkontur des Nockenringes und der Innenkontur der Nockenform des IHU-Werkzeuges.

Dieses Verfahren, die Eigenschaften des Nockenringes nur auf die spätere Funktion abzustimmen, hat den Nachteil, dass die zulässige Verformung des Nockenringes überschritten werden kann, und es kommt zu einem Bruch oder zur Vorschädigung, indem ein Anriss entsteht, der später beim Einsatz der Nockenwelle zum Bruch führt. Das tritt ein, wenn der Nockenring z.B. fehlerhaft wärmebehandelt wurde. Es besteht somit die Gefahr, dass der Schaden erst dann eintritt, wenn die Nockenwelle schon längere Zeit im Motor im Einsatz ist. Das kann in gleicher Weise auch bei im IHU-Verfahren aufgebrachte Zahnräder oder anderer Antriebselemente eintreten. Es wurde auch festgestellt, dass die erhöhte Bruchgefahr an den Stellen des Nockenringes besteht, wo dieser im IHU-Prozess besonders belastet wird; das ist der Bereich vor und hinter der Nockenspitze, besonders in den Radienübergängen und an der Nockenspitze.

Der Erfindung liegt die Aufgabe zugrunde, ein Verfahren zu schaffen, welches in Anwendung des bekannten IHU-Verfahrens auf einer Hohlwelle Bauteile, inbesondere Nocken, kraft- und formschlüssig derart verbindet, dass die Nockenringe eine zulässige Restdehnung von > = 0,5 % in dem Maß besitzen, das benötigt wird, um die Dehnung des Nockenringes und die Fertigungstoleranzen im Nockenring und/oder Werkzeug infolge des Innendruckes zu überbrücken.
Dabei soll verhindert werden, dass ein Bruch oder eine Vorschädigung eintritt, die den späteren Einsatz, insbesondere im Dauer- bzw. Langzeitbetrieb negativ beeinflussen könnte. Das neue Verfahren soll eine Kombination an sich bekannter Verfahren sein, die wirtschaftlich sind und geringen apperativen Aufwand erfordern. Eine weitere Aufgabe der Erfindung ist es, eine Nockenwelle zu schaffen, die kostengünstig ist, eine hohe Zuverlässigkeit aufweist und für den Dauerbetrieb in Kraftfahrzeugmotoren geeignet ist. Sie soll aus Material üblicher Qualität hergestellt sein. Es sind Nockenwellen herzustellen, die kaum Folgeschäden im Motor hervorrufen können.

Erfindungsgemäß wird die das Verfahren zum Verbinden von Bauteilen mit einer Hohlwelle vorzugsweise zu einer Nockenwelle betreffende Aufgabe gemäß Anspruch 1, 2 oder 3 gelöst. Vorteilhafte Ausgestaltungen des Verfahrens sind in den Ansprüchen 4 bis 8 beschrieben. Die die Nockenwelle betreffende Aufgabe wird mit den Merkmalen des Anspruches 9 gelöst; weitere Ausgestaltungen sind in den Ansprüchen 10 bis 19 beschrieben.

Erfindungsgemäß wird das bekannte IHU-Verfahren angewendet. In einem ersten Verfahrensschritt werden die Bauteile, insbesondere die Nockenringe, die mit der Welle kraft- und formschlüssig verbunden werden sollen, in ihrer funktionsbedingten Form (Kontur) hergestellt. Dazu wird ein Werkstoff verwendet, der nach der Härtung noch eine zulässige Restdehnung von > = 0,5 % besitzt, d.h., er darf in gehärtetem Zustand auf der Innen- und Außenseite neben seiner elastischen Verformbarkeit noch eine geringe zulässige plastische Verformbarkeit aufweisen. Am geeignetsten hierfür sind niedriglegierte Stähle z.B. Federstahl (58 CrMo V4), der sowohl eine nach der Wärmebehandlung zulässige Restdehnung besitzt, aber auch sehr gute Verschleißfestigkeit im Dauerbetrieb aufweist.

Diese vorgefertigten Nockenringe oder auch anderen Bauteile werden in das IHU-Werkzeug funktionsgerecht mit der Hohlwelle eingelegt und in einem zweiten Verfahrensschritt wird durch den in der Welle erzeugten Axialdruck diese Hohlwelle aufgeweitet; dabei werden die Nockenringe und/oder andere Bauelemente kraft- und formschlüssig mit der Hohlwelle verbunden.

In einer zweiten Ausführungsform der Erfindung werden die Nockenringe oder Bauteile nach der funktionsgerechten Herstellung, d.h. der Erzeugung der äußeren Kontur der Lauffläche des Nockens und der inneren Kontur, randschichtgehärtet. Dadurch werden die äußeren verschleißbeanspruchten Zonen hart und elastisch verformbar und die sich infolge des Innendruckes aufweitende Innenkontur auf der der Welle zugewandten Seite des Nockenringes bleibt in gewissem Grade weich, d.h. plastisch verformbar.
Das Randschichthärten erfolgt mit einer Zulässigen Restdehnung von > = 0,5% z.B. durch Einsatzhärten, Nitrieren, Induktionshärten oder durch Einwirkung eines Ladungsträgerstrahles.

In einer weiteren Ausführungsform der Erfindung werden die beiden genannten Verfahren, Herstellung der Nockenringe aus einem Stahl, der die Voraussetzungen zum Erreichen der notwendigen Restdehnung im gehärteten Zustand besitzt, mit dem Randschichthärten der Bauteile bzw. Nockenringe in Verbindung mit dem IHU-Verfahren kombiniert. Dabei werden die jeweils ersten Verfahrensschritte nacheinander und danach der zweite Verfahrensschritt ausgeführt.

Eine weitere Ausführungsform der Erfindung besteht darin, dass der Nockenring aus zwei Materialien zusammengesetzt ist, d.h. es ist auf einen inneren Ring aus einem weichen, plastisch verformbaren Material ein Ring aus einem harten und elastischen Material mit einer Zulässigen Restdehnung von > = 0,5% aufgebracht. Beide Ringe sind fest miteinander verbunden, was z.B. durch Einpressen oder Aufschrumpfen erfolgt. Damit besteht der Nockenring aus quasi zwei Zonen, wie es in der vorher beschriebenen Ausführungsform durch die Randschichthärtung erreicht wird.

Diese Lösung ist noch in folgenden Varianten ausführbar, indem die Dicke des Nockenringes ungleich ist, d.h. im Bereich der Nockenspitze dicker ist. Somit kann die Dicke im Bereich der Nockenspitze dadurch erreicht werden, dass die Dicke des inneren Ringes unterschiedlich, d.h. im Bereich der Nockenspitze dicker ist, und der äußere Ring eine gleiche Dicke besitzt, oder dass der innere Ring gleiche Dicke hat und der äußere Ring unterschiedliche Dicke besitzt. Der Außenring ist immer hart und verschleißfest.

Es kann auch vorteilhaft sein, bei allen Ausführungsformen der Erfindung auf der Hohlwelle einen runden symmetrischen Ring aus einem weichen Material, zweckmäßig wie das der Hohlwelle oder noch weicher, gleicher Dicke aufzubringen und auf diesem den in seiner Kontur funktionsgerecht geformten Nockenring aufzubringen, so dass im IHU-Prozess der runde innere Ring mit der Hohlwelle gemeinsam soweit verformt wird, bis die innere Kontur des äußeren Ringes, dem Nockenring errreicht ist. Durch den IHU-Prozess werden somit die Hohlwelle, der auf ihr aufgebrachte runde Ring und der darüber befindliche Nokkenring kraft- und formschlüssig verbunden. Der äußere Ring besteht aus einem harten Material, dessen zulässige Restdehnung > = 0,5 % beträgt, er darf neben seiner elastischen nur eine geringe zulässige plastische Verformbarkeit aufweisen. Es ist aber auch möglich, den äußeren Ring randschichtzuhärten.

Überraschenderweise wurde gefunden, dass die Mängel am Stand der Technik dadurch zu beseitigen sind, dass die erfindungsgemäß hergestellten bzw. behandelten Nockenringe die Eigenschaft besitzen, dass sich infolge des maximalen Innendruckes, der beim IHU-Verfahren auftritt, aufbauende Spannungszustände im Nockenring niedriger sind als bei den bekannten durchgehärteten Nockenringen oder denen, die aus einem Werkstoff bestehen, der durchgehend diese Härte aufweist.

Bei der Herstellung der Nockenringe wird durch die entsprechende Materialauswahl einschließlich des Härtens und dem Wärmebehandeln durch Randschichthärten, bei welcher zusätzlich Druckeigenspannungen in der gehärteten Schicht entstehen, der Schädigungsmechanismus noch weiter unterdrückt; die Nockenringe oder auch andere nach dem Verfahren hergestellte Bauteile halten dann wesentlich höheren Beanspruchungen stand.

Erfindungswesentlich für alle Ausführungsformen des Verfahrens ist, dass der Nockenring in seiner Materialdicke unterschiedliche Materialeigenschaften besitzt. Die obere Schicht, das ist die mechanisch im Betrieb beanspruchte, muss hart und elastisch verformbar sein und die darunter liegende Schicht plastisch und elastisch verformbar. Damit ist erreicht, dass selbst im Schädigungsfall keine durchgehenden Risse auftreten können, sondern im Ausnahmefall nur lokale Schädigungen. Diese Abplatzungen können niemals zur plötzlichen Zerstörung eines Motors führen.

Die nach dem erfindungsgemäßen Verfahren hergestellte Nockenwelle, die aus einer im IHU-Verfahren aufgeweiteten Hohlwelle besteht, auf welcher Nockenringe und auch andere Bauteile, wie Zahnräder oder Kupplungs- und Antriebelemente, aufgebracht sind, ist mit den Nokkenringen und auch anderen Bauteilen kraft- und formschlüssig zusammengesetzt, wobei die Nockenringe aus einem Material bestehen, das nach einer Härtung neben der elastischen Verformbarkeit noch eine geringfügig zulässige plastische Verformbarkeit aufweist bei harter und verschleißfester Oberfläche.

In einer zweiten Ausführungsform ist die Oberfläche des Nockenringes in einer definierten Dicke randschichtgehärtet. Dadurch ist die obere Schicht elastisch verformbar und die darunter liegende Schicht plastisch verformbar. Beide Ausführungsformen bezüglich der Herstellung des Nockenringes können auch vorteilhafterweise vereinigt sein, um noch bessere Gebrauchseigenschaften zu erzielen.

Schließlich besteht noch eine weitere Ausführungsform darin, dass die nach den erstgenannten Verfahren erzeugte harte und elastisch verformbare Oberschicht des Nockenringes dadurch erreicht wird, dass er aus zwei Materalien, hart - elastisch und weich - plastisch verformbar, zusammengesetzt ist. Diese Verbindung der beiden Ringe erfolgt zweckmäßig vor dem Einlegen in eine IHU-Presse.

Eine vorteilhafte Ausgestaltung der Nockenwelle besteht noch darin, dass die Dicke der Nockenringe unterschiedlich ist, indem der Bereich der Nockenspitze dicker ist. Der durch Randschichthärten behandelte Bereich der Materialdicke bleibt über dem gesamten Umfang des Nokkenringes in seiner Dicke gleich.

Das erfindungsgemäße Verfahren ist auch für andere Anwendungen bzw. die Herstellung anderer Erzeugnisse verwendbar, und zwar immer dann, wenn durch ein IHU-Verfahren auf einem dünnwandigen Rohr, welches nicht unbedingt rund sein muss, Bauteile oder Elemente kraft-und formschlüssig befestigt werden müssen.

An einem Anwendungsbeispiel wird eine erfindungsgemäß hergestellte Nockenwelle beschrieben.

In der zugehörigen Zeichnung zeigen:
- Fig.1:: einen Querschnitt durch eine Nockenwelle im Bereich eines Nokkens gleicher Wanddicke,
- Fig.2:: einen Längsschnitt durch eine Nockenwelle,
- Fig.3:: einen Querschnitt durch eine Nockenwelle im Bereich eines Nokkens aus zwei Materalien und unterschiedlicher Wanddicke.

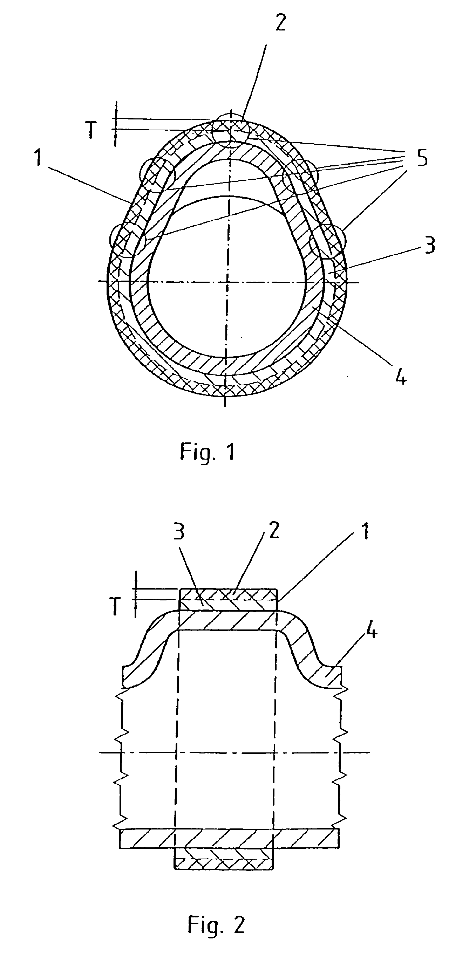

In Fig. 1 und 2 werden in einem getrennten bekannten mechanischen Verfahren die Nockenringe 1 mit ihrer funktionsbedingten Kontur hergestellt. Es wird als Material 58 CrMoV6 verwendet. Danach werden die Nockenringe 1 in bekannter Weise randschichtgehärtet. Dieser Härtevorgang wird derart gesteuert, dass in einer Tiefe T eine gehärtete Schicht 2 entsteht, die elastisch verformbar ist und eine geringe plastische Verformung noch zulässt. Der unter der Schicht 2 befindliche Bereich 3 bleibt ungehärtet, d.h. er ist sowohl plastisch als auch elastisch verformbar. Der Nockenring 1 ist durch das bekannte IHU-Verfahren auf einer Hohlwelle 4 kraft- und formschlüssig aufgebracht. Die Hohlwelle 4, ursprünglich ein rotationssymmetrisches Rohr, besteht aus einem Material, das plastisch verformbar ist.

Der Bereich, in dem nach dem Verfahren gemäß dem Stand der Technik Mängel durch Rissbildung auftraten, ist mit 5 bezeichnet und durch das erfindungsgemäße Verfahren beseitigt.

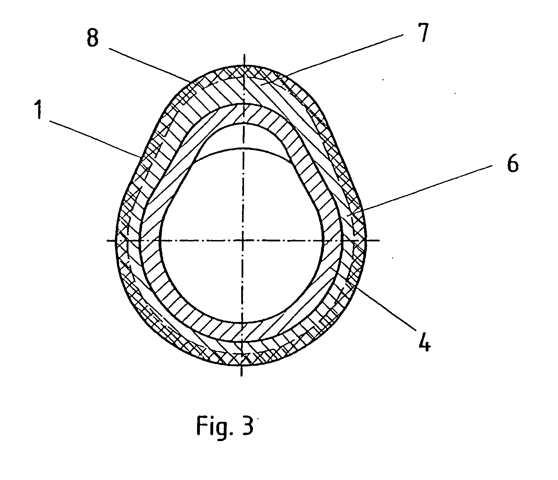

In Fig. 3 bestehen die Nockenringe 2 aus einem unmittelbar auf der Hohlwelle 4 aufgebrachten inneren Ring 6, der aus einem weichen, plastisch verformbaren Material besteht. Er ist im Bereich der Nockenspitze 7 wesentlich dicker als in seinem übrigen Bereich. Auf diesem Ring 6 ist ein vorhandener Ring 8 mit gleicher Dicke, aus einem harten, elastisch verformbaren Material aufgebracht. Seine äußere Kontur ist der Funktion entsprechend ausgebildet.
Die beiden Ringe 6 und 8 werden vor dem Einlegen in das IHU-Werkzeug kraft- und formschlüssig, beispielsweise durch Aufschrumpfen, miteinander verbunden.

## Patentansprüche

1. Verfahren zum Verbinden von Bauteilen mit Hohlwellen, vorzugsweise zur Herstellung von Nockenwellen, indem in einem ersten Verfahrensschritt die Bauteile, insbesondere Nockenringe, mit ihrer funktionsbedingten Kontur hergestellt werden, dass dazu ein härtbarer Werkstoff verwendet wird, der nach dem Härten neben seiner elastischen Verformbarkeit noch eine geringe zulässige plastische Verformbarkeit besitzt, dass diese Bauteile gemeinsam mit der zu verformenden Hohlwelle funktionsgerecht in ein IHU-Werkzeug eingelegt werden und dass in einem zweiten Verfahrensschritt durch ein IHU-Verfahren durch die Wirkung des Innendruckes die Bauteile mit der Hohlwelle kraft und formschlüssig verbunden werden, **dadurch gekennzeichnet, daß** der härtbare Werkstoff nach dem Härten eine zulässige Restdehnung von > = 0,5 % besitzt.

2. Verfahren zum Verbinden von Bauteilen mit Hohlwellen, vorzugsweise zur Herstellung von Nockenwellen, indem in einem ersten Verfahrensschritt die Bauteile, insbesondere Nockenringe, mit ihrer funktionsbedingten Kontur hergestellt werden, dass danach die Oberfläche der Bauteile, insbesondere die Lauffläche der Nocken, randschichtgehärtet wird, dass diese Bauteile gemeinsam mit der zu verformenden Hohlwelle funktionsgerecht in ein IHU-Werkzeug eingelegt werden, und dass in einem zweiten Verfahrensschritt durch ein IHU-Verfahren durch die Wirkung des Innendruckes die Bauteile mit der Hohlwelle kraft- und formschlüssig verbunden werden, **dadurch gekennzeichnet, daß** nach der Randschichthärtung die Oberfläche der Bauteile eine zulässige Restdehnung von > = 0,5 % besitzt.

3. Verfahren zum Verbinden von Bauteilen mit Hohlwellen, vorzugsweise zur Herstellung von Nockenwellen, indem in einem ersten Verfahrensschritt die Bautelle, insbesondere Nockenringe, aus zwei einzelnen miteinander kraft- und formschlüssig verbundenen Ringen unterschiedlichen Materials, wobei das des äußeren Ringes hart und elastisch, und das des inneren Ringes weich und plastisch verformbar ist, und mit ihrer funktionsbedingten Kontur hergestellt werden, dass diese Bauteile gemeinsam mit der zu verformenden Hohlwelle funktionsgerecht in ein IHU-Werkzeug eingelegt werden, und dass in einem zweiten Verfahrensschritt durch ein IHU-Verfahren durch die Wirkung des Innendruckes die Bauteile mit der Hohlwelle kraft- und formschlüssig verbunden werden, **dadurch gekennzeichnet, daß** das Material des äußeren Ringes eine zulässige Restdehnung von > = 0,5% aufweist.

4. Verfahren zum Verbinden von Bauteilen mit einer Hohlwelle nach Anspruch 1, **dadurch gekennzeichnet, dass** die Oberfläche der Bauteile, insbesondere die Lauffläche der Nocken, randschichtgehärtet wird, und danach der zweite Verfahrensschritt ausgeführt wird.

5. Verfahren nach einem der Ansprüche 2 oder 4, **dadurch gekennzeichnet, dass** die Randschichthärtung durch Induktivhärten, Einsatzhärten, Nitrieren oder Ladungsträgerstrahlen erfolgt.

6. Verfahren nach Anspruch 3, **dadurch gekennzeichnet, dass** der innere Ring im Bereich der Nockenspitze dicker ist und der äußere Ring gleiche Dicke besitzt.

7. Verfahren nach Anspruch 3, **dadurch gekennzeichnet, dass** der äußere Ring im Bereich der Nockenspitze dicker ist und der innere Ring gleiche Dicke besitzt.

8. Verfahren nach Anspruch 3,6 oder 7, **dadurch gekennzeichnet, dass** der innere und äußere Ring durch Aufschrumpfen oder Pressen miteinander verbunden werden.

9. Nockenwelle, hergestellt nach einem Verfahren nach einem der Ansprüche 1 bis 4, indem auf einer Hohlwelle (2) Bauteile, insbesondere Nockenringe (1), die in einem getrennten Verfahren konturengerecht hergestellt sind, durch ein IHU-Verfahren kraft-und formschlüssig aufgebracht sind, wobei die Bauteile, insbesondere Nockenringe (1) auf ihrer Oberfläche einen definierten Dickenbereich aufweisen, der hart und elastisch und geringfügig plastisch verformbar ist, und der darunter liegende Bereich plastisch verformbar ist, **dadurch gekennzeichnet, daß** der Dickenbereich eine zulässige Restdehnung von > = 0,5 % aufweist.

10. Nockenwelle nach Anspruch 9, **dadurch gekennzeichnet, dass** die Nockenringe (1) nach der Herstellung in ihrer funktionsbedingten Form gehärtet sind.

11. Nockenwelle nach Anspruch 9, **dadurch gekennzeichnet, dass** die Nockenringe (1) nach der Herstellung in ihrer funktionsbedingten Form randschichtgehärtet sind.

12. Nockenwelle nach Anspruch 9, **dadurch gekennzeichnet, dass** die Nockenringe (1) aus zwei kraft- und formschlüssig miteinander verbundenen Ringen (6; 8) bestehen.

13. Nockenwelle nach Anspruch 12, **dadurch gekennzeichnet, dass** die Ringe (6; 8) aus unterschiedlichem Material bestehen, indem der innere Ring (6) aus einem weichen, plastisch verformbaren Material und der äußere Ring (8) aus einem harten elastischen Material bestehen.

14. Nockenwelle nach Anspruch 12 und 13, **dadurch gekennzeichnet, dass** der innere Ring (6) im Bereich der Nockenspitze (7) dicker ist, und der äußere Ring (8) in seiner Dicke gleich ist.

15. Nockenwelle nach Anspruch 12 und 13, **dadurch gekennzeichnet, dass** der äußere Ring (8) im Bereich der Nockenspitze (7) dicker ist, und dass der innere Ring (6) in seiner Dicke gleich ist.

16. Nockenwelle nach Anspruch 9 bis 11, **dadurch gekennzeichnet, dass** die Nockenringe (1) in ihrer Wanddicke unterschiedlich sind, indem der Bereich der Nockenspitze (7) dicker ist.

17. Nockenwelle nach mindestens einem der Ansprüche 13 und 14, **dadurch gekennzeichnet, dass** der innere Ring (6) nur ein volumenausfüllendes Segment zwischen Ring (8) und Hohlwelle (4) im Bereich der Nockenspitze (7) ist.

18. Nockenwelle nach mindestens einem der Ansprüche 9 bis 17, **dadurch gekennzeichnet, dass** auf der Hohlwelle (4) im Bereich eines Nockenringes (1) ein Ring mit gleicher Dicke aus einem weichen Material, welches gleich oder weicher als das der Hohlwelle (4) ist, aufgebracht ist, und dass auf diesem Ring der Nockenring (1), der aus einem Material, dessen Oberfläche randschichtgehärtet ist oder aus einem harten, elastischen Material besteht, oder aus zwei Ringen (6; 8) unterschiedlichen Materials, die miteinander verbunden sind, aufgebracht ist.

19. Nockenwelle nach Anspruch 9, **dadurch gekennzeichnet, dass** weitere Bauteile Zahnräder, Kettenräder oder ähnliche kraftübertragende Funktionselemente sind, die in einer definierten Dicke vom Fußkreis nach innen die elastisch verformbare Schicht besitzen.

## Claims

1. Method for the linking of components to hollow shafts, preferably for producing camshafts, **characterized in that** in a first process step the components, especially cam rings, are manufactured so as to generate their function-related contour, that a hardenable material is used for this purpose which, aside from its elastic deformability, after hardening still has a permissible plastic deformability of minor extent, that these components together with the hollow shaft to be deformed are placed into an IHPF tool in a manner to suit the respective function, and that in a second process step through the application of the IHPF process and due to the internal pressure exerted the components are joined to the hollow shaft in a force- and form-closing manner, charcterized **in that** the hardenable material shows a permissible residual expansion of > = 0.5 %.

2. Method for the linking of components to hollow shafts, preferably for producing camshafts, **characterized in that** in a first process step the components, especially cam rings, are manufactured so as to generate their function-related contour, that subsequently the surface of the components, particularly the contact face of the cams, is subjected to a surface-hardening process, that these components together with the hollow shaft to be deformed are placed into an IHPF tool in a manner to suit the respective function, and that in a second process step through the application of an IHPF process and due to the internal pressure exerted the components are joined to the hollow shaft in a force- and form-closing manner, **characterized in that** after surface-hardening the surface of the components has a permissible residual expansion of > = 0.5 %.

3. Method for the linking of components to hollow shafts, preferably for producing camshafts, **characterized in that** in a first process step the components, especially cam rings, are manufactured, so as to generate their function-related contour, of two individual rings of different material connected to each other in a force- and form-closing manner with the material of the outer ring being hard and elastic and that of the inner ring being soft and plastically deformable, that these components together with the hollow shaft to be deformed are placed into an IHPF tool in a manner to suit the respective function, and that in a second process step through the application of an IHPF process and due to the internal pressure exerted the components are joined to the hollow shaft in a force- and form-closing manner, **characterized in that** the material of the outer ring has a permissible residual expansion of > = 0.5 %.

4. Method for the joining of components to a hollow shaft according to claim 1, **characterized in that** the surface of the components, in particular the contact face of the cams, is surface-hardened, and the second process step is carried out thereafter.

5. Method according to one of the claims 2 or 4, **characterized in that** the surface hardening is achieved by induction hardening, case hardening, nitriding or through the effect of charge carrier beams.

6. Method according to claim 3, **characterized in that** the inner ring in the area of the cam tip is thicker and the outer ring has a uniform thickness.

7. Method according to claim 3, **characterized in that** the outer ring in the area of the cam tip is thicker and the inner ring has a uniform thickness.

8. Method according to claims 3, 6 or 7, **characterized in that** the inner ring and the outer ring are joined to each other by means of a shrink-on or press-fit process.

9. Camshaft manufactured according to a method according to any one of the claims 1 to 4, wherein components, in particular cam rings (1), made with appropriate contours in a separate process, are mounted onto a hollow shaft (2) by an IHPF process in a force- and form-closing manner, wherein the components, especially the cam rings (1), have a defined thickness area on their surface that is hard and elastic and to a minor extent plastically deformable, with the area below being plastically deformable, **characterized in that** the defined thickness area has a permissible residual expansion of > = 0.5 %.

10. Camshaft according to claim 9, **characterized in that** the cam rings (1), when the manufacturing process is completed, are hardened in their function-related form.

11. Camshaft according to claim 9, **characterized in that** the cam rings (1), when the manufacturing process is completed, are surface-hardened in their function-related form.

12. Camshaft according to claim 9, **characterized in that** the cam rings (1) consist of two rings (6; 8) joined with each other in a force- and form-closing manner.

13. Camshaft according to claim 12, **characterized in that** the rings (6; 8) consist of different materials, with the inner ring (6) being made of a soft, plastically deformable material and the outer ring (8) being made of a hard, elastic material.

14. Camshaft according to claim 12 and 13, **characterized in that** the inner ring (6) in the area of the cam tip (7) is thicker and the outer ring (8) has a uniform thickness.

15. Camshaft according to claim 12 and 13, **characterized in that** the outer ring (8) in the area of the cam tip (7) is thicker and the inner ring (6) has a uniform thickness.

16. Camshaft according to claims 9 to 11, **characterized in that** the cam rings (1) have a varying wall thickness **in that** the area of the cam tip (7) is thicker.

17. Camshaft according to any one of the claims 13 and 14, **characterized in that** the inner ring (6) is only a volume-filling segment between ring (8) and hollow shaft (4) in the area of the cam tip (7).

18. Camshaft according to any one of the claims 9 to 17, **characterized in that** a ring of uniform thickness of a soft material, which is the same as that of the hollow shaft (4) or softer than it, is mounted on the hollow shaft (4) in the area of a cam ring (1), and that the cam ring (1) is mounted on this ring, said cam ring consisting of a material the surface of which has been surface hardened or consists of a hard, elastic material or of two rings (6; 8) of different material which are connected to each other.

19. Camshaft according to claims 9, **characterized in that** the further components are gearwheels, sprockets or similar force-transmitting functional elements that possess over a defined thickness from the root circle towards the inside the elastically deformable layer.

## Revendications

1. Procédé pour le raccordement d'éléments avec un arbre creux, de préférence pour la fabrication d'arbres à cames; dans une première étape du procédé, les éléments, en particulier les bagues de cames, sont fabriqués avec leur contour approprié à la fonction, que dans ce but l'on utilise un matériau durcissant, qui après le durcissement possède encore, outre sa capacité de mise en forme élastique, une faible capacité autorisée de mise en forme plastique, que ces éléments soient introduits fonctionnellement avec l'arbre creux à mettre en forme dans un outil de mise en forme à haute pression intérieure et que dans une deuxième étape par un procédé de mise en forme à haute pression intérieure, par l'action de la pression intérieure, les éléments placés en complémentarité de force et de forme soient reliés à l'arbre creux, **caractérisé en ce que** le matériau durcissant conserve après le durcissement une dilatation restante autorisée de >= 0,5%.

2. Procédé pour le raccordement d'éléments avec un arbre creux, de préférence pour la fabrication d'arbres à cames; dans une première étape du procédé, les éléments, en particulier les bagues de cames, sont fabriqués avec leur contour approprié à la fonction, qu'ensuite la surface des éléments, en particulier la surface coulissante des cames, soit durcie selon les couches du bord, que ces éléments soient introduits fonctionnellement avec l'arbre creux à mettre en forme dans un outil de mise en forme à haute pression intérieure et que, dans une deuxième étape par un procédé de mise en forme à haute pression intérieure, par l'action de la pression intérieure, les éléments placés en complémentarité de force et de forme soient reliés à l'arbre creux, **caractérisé en ce que** après le durcissement de la couche du bord la surface des éléments conserve une dilatation restante autorisée de >= 0,5%.

3. Procédé pour le raccordement d'éléments avec un arbre creux, de préférence pour la fabrication d'arbres à cames; dans une première étape du procédé, les éléments, en particulier les bagues de cames, formés de deux bagues de matériau différent reliées entre elles en complémentarité de force et de forme, où le matériau de la bague extérieure est dur et élastique, tandis que celui de la bague intérieure est mou et plastique, sont fabriqués avec un contour approprié à leur fonction, que ces éléments soient introduits fonctionnellement avec l'arbre creux à mettre en forme dans un outil de mise en forme à haute pression intérieure et que, dans une deuxième étape par un procédé de mise en forme à haute pression intérieure, par l'action de la pression intérieure, les éléments placés en complémentarité de force et de forme soient reliés à l'arbre creux, **caractérisé en ce que** le matériau de la bague extérieure conserve une dilatation autorisée restante de >= 5%.

4. Procédé pour le raccordement d'éléments avec un arbre creux selon la revendication 1, **caractérisé en ce que**, la surface des éléments, en particulier la surface coulissante des cames, soit durcie selon les couches du bord et qu'ensuite la deuxième étape du procédé soit exécutée.

5. Procédé selon une des revendications 2 ou 4, **caractérisé en ce que**, le durcissement des couches du bord s'effectue par durcissement inductif, durcissement d'introduction, par nitrification ou radiations de porteurs de charge.

6. Procédé selon la revendication 3, **caractérisé en ce que** la bague intérieure dans la zone du sommet de came est plus épaisse et que la bague extérieure possède une épaisseur égale.

7. Procédé selon la revendication 3, **caractérisé en ce que** la bague intérieure dans la zone du sommet de came est plus épaisse et que la bague extérieure possède une épaisseur égale.

8. Procédé selon la revendication 3, 6 ou 7 **caractérisé en ce que**, la bague intérieure et la bague extérieure sont reliées l'une à l'autre par réduction ou par pression.

9. Arbre à cames, fabriqué selon un procédé conforme à une des revendications 1 à 4, dans la mesure où sur un arbre creux (2) des éléments, en particulier des bagues de cames (1), fabriquées avec des contours appropriés selon un procédé distinct, sont appliqués en complémentarité de force et de forme selon un procédé de mise en forme à haute pression intérieure, où les éléments, en particulier les bagues de cames (1), présentent sur leur surface une zone d'épaisseur définie, que l'on peut mettre en forme au niveau de la dureté et de l'élasticité et de façon minime au niveau de la plasticité et où la zone inférieure peut être mise en forme plastiquement, **caractérisé en ce que** la zone d'épaisseur présente une dilatation autorisée restante de >= 0,5 %.

10. Arbre à cames selon la revendication 9, **caractérisé en ce que**, que les bagues de cames (1) après la fabrication sont durcies dans leur forme appropriée à la fonction.

11. Arbre à cames selon la revendication 9, **caractérisé en ce que**, que les bagues de cames (1) après la fabrication sont durcies dans leur forme appropriée à la fonction selon les couches du bord.

12. Arbre à cames selon la revendication 9, **caractérisé en ce que**, que les bagues de cames (1), se composent de deux bagues reliées entre elles en complémentarité de force et de forme (6,8).

13. Arbre à cames selon la revendication 12, **caractérisé en ce que**, les bagues (6,8) se composent de matériaux différents, dans la mesure où la bague intérieure (6) est d'un matériau mou, que l'on peut mettre en forme plastiquement, tandis que la bague extérieure (8) est d'un matériau dur, élastique.

14. Arbre à cames selon les revendications 12 et 13, **caractérisé en ce que**, la bague intérieure (6) est plus épaisse dans la zone du sommet de came (7) et que la bague extérieure (8) est égale dans son épaisseur.

15. Arbre à cames selon les revendications 12 et 13, **caractérisé en ce que** la bague extérieure (8) est plus épaisse dans la zone du sommet de came (7) et que la bague intérieure (6) est égale dans son épaisseur.

16. Arbre à cames selon les revendications 9 à 11, **caractérisé en ce que**, les bagues de came (1) ont une épaisseur de paroi différente, dans la mesure où la zone des sommets de cames est plus épaisse.

17. Arbre à cames selon au moins l'une des revendications 13 et 14, **caractérisé en ce que**, la bague intérieure (6) n'est qu'un segment remplissant du volume entre bague (8) et arbre creux (4) dans la zone des sommets de cames.

18. Arbres à cames selon au moins l'une des revendications 9 à 17, **caractérisé en ce que**, sur l'arbre creux (4), dans la zone d'une bague de cames (1), a été appliquée une bague de même épaisseur en un matériau mou, identique ou plus mou que celui de l'arbre creux (4), et que sur cette bague a été appliquée la bague des cames (1) qui se compose d'un matériau dont la surface a été durcie selon les couches du bord ou d'un matériau dur, élastique ou deux bagues (6,8) de matériaux différents reliées entre elles.

19. Arbre à cames selon les revendications 9, **caractérisé en ce que**, d'autres éléments sont des roues dentées, des roues à chaînes ou de semblables éléments fonctionnels transmetteurs de force qui selon une épaisseur définie occupent, depuis le pied vers l'intérieur, la couche que l'on peut mettre en forme élastiquement.
